# EUROPÄISCHE PATENTANMELDUNG

(11) **EP 3 106 436 A1**
(43) Veröffentlichungstag der Anmeldung: **21.12.2016**
(21) Anmeldenummer: 16174917.1
(22) Anmeldetag: 17.06.2016
(51) Int. Cl.: C02F 1/20, C02F 3/28, C02F 11/04

(54) **VERFAHREN UND VORRICHTUNG ZUR GEWINNUNG VON METHAN AUS ANAEROBEN ABWÄSSERN**

(30) Priorität: 19.06.2015 DE 102015109822
(71) Anmelder: Gottfried Wilhelm Leibniz Universität Hannover, 30167 Hannover (DE)
(72) Erfinder: Nelting, Klaus, 22763 Hamburg (DE); Trautmann, Niklas, 30167 Hannover (DE); Rosenwinkel, Karl-Heinz, 30539 Hannover (DE); Weichgrebe, Dirk, 31848 Bad Münder (DE)
(74) Vertreter: Kröncke, Rolf

(57) **Zusammenfassung**

Die vorliegende Erfindung betrifft ein Verfahren und eine Vorrichtung sowie eine Anlage zur anaeroben Gewinnung von Methan, insbesondere zur kontrollierten Rückgewinnung von Methan aus, gegebenenfalls Feststoffe enthaltenden, anaeroben methanhaltigen Abwasser, wobei das Methan im Abwasser überwiegend in gelöster Form vorliegt. Das Verfahren gemäß vorliegender Erfindung basiert auf dem Prinzip der Vakuumentgasung bei dem große Ausgasungsflächen in einem Reaktor erzeugt werden, durch den die anaeroben Abwässer geleitet werden. Die Ausgasungsflächen können insbesondere durch die Erzeugung und Aufrechterhaltung von turbulenten Strömungen des methanhaltigen Abwassers erhöht werden. Zusätzlich kann durch Verwendung eines Strippgases, gelöstes Methan aus der Wasserphase ausgesrippt werden, oder durch Verwendung eines Trägergases der Methangehalt in der Gasphase im Reaktor heruntergesetzt werden, um ein Ausgasen von gelösten Methan zu beschleunigen.

## Beschreibung

Die vorliegende Erfindung betrifft ein Verfahren und eine Vorrichtung sowie eine Anlage zur sauerstofffreien Gewinnung von Methan, insbesondere zur kontrollierten Rückgewinnung von Methan aus, gegebenenfalls Feststoffe enthaltenden, anaeroben methanhaltigen Abwasser, wobei das Methan im Abwasser überwiegend in gelöster Form vorliegt. Das Verfahren gemäß vorliegender Erfindung basiert auf dem Prinzip der Vakuumentgasung bei dem große Ausgasungsflächen in einem Reaktor erzeugt werden, durch den die Abwässer nach anaerober Abwasserbehandlung geleitet werden. Dieses wird dabei im Wesentlichen sauerstofffrei unter Fortführung der anaeroben Bedingungen durchgeführt. Die Ausgasungsflächen können insbesondere durch die Erzeugung und Aufrechterhaltung von turbulenten Strömungen des methanhaltigen Abwassers erhöht werden.

### Stand der Technik

Wasala et.al. Water Research 45 (2011) S. 3522-3540 beschreiben die Rückgewinnung von gelöstem Methan im Abfluss eines "upflow anaerobic sludge blanket" UASB Reaktors mit einer hydrophilen Membran, die im Wasser eingetaucht ist, wobei das Methan selektiv durch das Vakuum aus der Wasserphase angesaugt und entfernt wird. Für das Entfernen des Methans wird ein Hohlfasermembranmodul verwendet, das mit dem Auslass des Reaktors verbunden ist.

Matsuura et. al., Water Science & Technology (2010), 61.9, S. 2407-2415 beschreiben eine anaerobe Abwasserbehandlung in einem zweistufigen geschlossenen "downflow hanging sponge (DHS) Reaktor. In der ersten Stufe werden etwa 77% des Methans, welches aus dem Abwasser eines UASB-Reaktors stammt, durch Strippen mit porösem Kunststoff-Schaumkörper in Sauerstoff haltigem Luftstrom entfernt. In der zweiten Stufe wird das restliche gelöste Methan durch einen biologischen Prozess oxidiert.

DE 10 2007 055 297 A1 beschreibt ein Verfahren und eine Vorrichtung zur Entgasung von Abwasser. Das Abwasser ist mit Feststoffen beladen und es enthält Gase in gelöster Form. Mittels Vakuumbehandlung werden im Abwasser gelöste Gase abgetrennt und entgastes Wasser erzeugt. Der für die Vakuumbehandlung erforderliche Unterdruck wird anhand eines, mit Wasserdampf betriebenen Ejektors, erzeugt.

In der DE 2 423 085 A1 werden ein Verfahren und eine Vorrichtung zur Behandlung von Flüssigkeiten, insbesondere von Abwasser mit biologisch abbaubaren Verunreinigungen, dargestellt. Das Abwasser wird in einem System umgewälzt, dass ein Fallrohr und ein Steigrohr umfasst, wobei dem Abwasser beim Passieren des Fallrohres ein sauerstoffhaltiges Gas hinzugefügt wird.

EP 0790851 B1 offenbart ein Verfahren und Vorrichtung zur Belebtschlammentgasung. Dabei sollen die Absetzeigenschaften von aerobem Schlamm innerhalb des aeroben Belebungsverfahrens verbessert werden. Dies erfolgt durch das Entgasen von Gasblasen, die innerhalb des Belebtschlammes gefangen sind und somit das Absetzen des Schlammes in einem Absetzbecken verhindern.

DE 37 14591 A1 beschreibt ein Verfahren zur Behandlung von ausgefaultem Klärschlamm, wobei der Schlamm einem Vakuum von 0,05 bar bis 0,7 bar unterworfen wird. Die Entgasung findet in einem Stoffaustauschapparat statt, aus dem das entstehende Gas über eine Vakuumpumpe abgezogen und in die Faulgasleitung eingespeist wird.

US 5,195,578 offenbart ein Verfahren und einen Wärmetauscher bei dem das Prinzip der Fallfilme zu Nutze gemacht wird. Bei Fallfilmen werden an einem dünnen Flüssigkeitsfilm, der an einem Rohr herunterläuft, Stoffe aus einem Gasvolumenstrom abgeschieden.

WO 2012/084480 A1 beschreibt ein Verfahren zum Entgasen von mit gelösten gasförmigen Verbindungen, insbesondere mit Kohlendioxid CO₂, mit Kohlenmonoxid CO und gegebenenfalls mit Feststoffen belasteten Prozesswässern. Dabei wird das Prozesswasser über ein Eintragelement in einen geschlossenen Behälter eingebracht und anschließend wird das Prozesswasser einem Druckabfall unterworfen.

Aus der EP 2 463 240 B1 ist ein Konzept zur kombinierten Speicherung, energetischen Verwertung und/oder Neutralisation von in anaeroben Abwasserbehandlungssystemen erfasstem Biogas sowie Rückgewinnung von gelöstem Biogas in der Wasserphase in einer nachgeschalteten Behandlungsstufe bekannt. Die Rückgewinnungsstufe des gelösten Biogases kann durch eine Strippanlage mit Luft oder einer Vakuumentgasung ausgeführt werden. Dabei werden die Abwässer aus dem Reaktor über eine Sammelleitung und unter Nutzung des Gefälles abgeführt sowie mit Hilfe von Pumpen der nachgeschalteten Biogasrückgewinnung zugeführt.

Bei den bekannten anaeroben Abwasserbehandlungsverfahren wird Methan produziert, welches bisher gezielt durch eine Gasfassung innerhalb der Reaktoren aufgefangen und anschließend unter Erzeugung elektrischer oder thermischer Energie verwertet wird. In den anaerob behandelten Abwässern liegt das Methangas in gelöster Form vor. Je nach Verfahrensweise verlässt ein nicht vernachlässigbarer Anteil des gebildeten Methans die anaeroben Reaktoren in gelöster Form über den Ablauf des Reaktors. Die Abläufe der Anlagen zur anaeroben Behandlung insbesondere von kommunalen und industriellen Abwässern können je nach Temperatur, Abwasserzusammensetzung und Reaktortyp 5-60% der gesamten, im Prozess zufließenden und umgesetzten CSB (chemischer Sauerstoffbedarf) - Fracht, als Methan enthalten. Dieser Anteil entweicht unkontrolliert in die Atmosphäre. Methan ist ein Treibhausgas, das ein 25-faches Treibhauspotential (GWP) im Vergleich zu Kohlendioxid (CO₂) hat.

Es ist daher die Aufgabe der vorliegenden Erfindung, die Treibgasemissionen herkömmlicher Verfahren zu minimieren. Eine weitere Aufgabe der vorliegenden Erfindung ist die energieeffiziente Rückgewinnung von Methan um eine verbesserte energetische Verwertung des Methans innerhalb anaerober Abwasserbehandlungsanlagen zu ermöglichen. Insbesondere ist die Aufgabe der vorliegenden Erfindung die Treibhausgasemissionen, die z. B. durch kommunale, beziehungsweise industrielle Abwasserbehandlungsanlagen entstehen, zu reduzieren oder gänzlich zu vermeiden und die Ausschöpfung des energetischen Potentials bei der Verwertung des Methans zu verbessern sowie den Anteil der regenerativen Energie infolge der Methanverbrennung zu erhöhen.

Kurze Beschreibung der Figuren
Figur 1 stellt schematisch eine Ausführungsform des Verfahrens gemäß vorliegender Erfindung dar, wobei der Reaktor (10) als Fallfilm-Reaktor mit einer rohrförmigen Innenvorrichtung (3) ausgebildet ist.
Figur 2 stellt schematisch ein Verfahren gemäß vorliegender Erfindung dar, das einen Reaktor (10) mit einer Innenvorrrichtung (3) ausgebildet als Füllkörpersäule aufweist.
In Figur 3 ist die Entfernung des Methans mittels Vakuumentgasung in einer erfindungsgemäßen Anlage mit erfindungsgemäßer zwischengeschalteter Behandlungsstufe des anaeroben Abwassers dargestellt.

### Beschreibung der Erfindung

Eine nahezu vollständige Entfernung des Methans aus anaerobem Abwasser kann erreicht werden, wenn die Ausgasungsfläche im Reaktor mit mindestens einer Innenvorrichtung, die unterschiedlich ausgestaltet sein kann, vergrößert wird. Wird zusätzlich eine turbulente Strömung des methanhaltigen Abwassers im Reaktor erzeugt und aufrechterhalten, was zu einer Vergrößerung des Ausgasungsfläche führt, so kann das Methan noch effizienter aus dem anaeroben Abwasser entfernt werden. Die turbulente Strömung bewirkt, dass der Ausgasungswiederstand, auch als kLA-Wert-Stofftransferkoeffizient bezeichnet reduziert wird und dadurch die Ausgasung des im Wasser gelösten Methans beschleunigt wird.

Gegenstand der vorliegenden Erfindung ist ein Verfahren zur anaeroben (sauerstofffreien) Gewinnung von Methan aus, gegebenenfalls Feststoffe enthaltenden, anaerobem methanhaltigen Abwasser umfassend folgende Schritte:
a) Einführung des anaeroben methanhaltigen Abwassers über eine Zuleitung (1) in einen geschlossenen Reaktor (10), wobei der Reaktor einen Außenbehälter (2), mit mindestens einer Innenvorrichtung (3), einen gegebenenfalls abnehmbaren Reaktorabschnitt (8) und, gegebenenfalls eine Zuleitung (5) für Trägergas und/oder eine Zuleitung (6) für Strippgas umfasst;
b) Erzeugung eines Unterdrucks im Reaktor (10) mittels Vakuumpumpe (4);
c) Bildung einer vergrößerten Ausgasungsfläche des anaeroben methanhaltigen Abwassers im Reaktor (10) mittels Innenvorrichtung (3), wobei das erhaltene im Wesentlichen Methan-freie Abwasser sich in einem Abschnitt des Reaktors sammelt getrennt von dem eingeführten anaeroben methanhaltigen Abwasser und, gegebenenfalls der Feststoff in einem Reaktorabschnitt (8) sedimentiert;
d) Abzug des Methans mittels Vakuumpumpe (4) und des erhaltenen, im Wesentlichen Methan-freien Abwassers über die Ablaufleitung (7);
e) gegebenenfalls Abzug des sedimentierten Feststoffes aus dem Reaktorabschnitt (8) über die Abzugsleitung (9).

Das Methan liegt in den anaeroben Abwässern überwiegend in gelöster Form vor. Je nach Methan-Gehalt im Abwasser kann im Reaktor zur Vergrößerung der Ausgasungsfläche zusätzlich eine turbulente Strömung eingestellt werden. Dies ermöglicht eine kontrollierte und eine noch effizientere Gewinnung, bzw. Rückgewinnung von Methan aus den methanhaltigen Abwässern.

Vorliegend wird unter dem Ausdruck "methanhaltiges Abwasser" Abwasser verstanden, in dem gelöstes Methan mit einem Gehalt von 0,1 bis 40 mg CH₄/Liter Abwasser vorliegt.

Vorliegend werden die Begriffe "anaerob" und "sauerstoffrei" synonym verwendet, solange nicht anders ausgeführt.

Im Sinne der vorliegenden Erfindung wird unter Methan-freiem Abwasser oder Methan-reduziertem Abwasser, Abwasser verstanden, das im Vergleich zum eingeleiteten methanhaltigen Abwasser einen Methangehalt um wenigstens 10%, wie wenigstens 20%, z.B. um wenigstens 30%, 40%, 50% oder 60% reduziert ist. Die Reduktion um wenigstens 70%, wie wenigstens 80%, z.B. um wenigstens 90% beträgt, bezogen auf die Menge an gelöstem Methan im Abwasser.

Das Grundprinzip des Verfahrens gemäß der vorliegenden Erfindung basiert darauf, dass das methanhaltige anaerobe Abwasser in einen Reaktor (10) über eine Zulaufleitung (1), genannt auch Zuleitung (1), in einen Reaktor fließt in dem ein Wasserfilm mit einer großen Oberfläche an einer Innenvorrichtung erzeugt wird, und gegebenenfalls darüber hinaus das anaerobe methanhaltige Abwasser unter Ausnutzung der turbulenten Strömung im Reaktor das Methan freigibt. Gleichzeitig wird in dem Reaktor Vakuum erzeugt, wodurch die Löslichkeit des Methans im Abwasser herabgesetzt wird und der Ausgasungsprozess des Methans aus dem Abwasser verstärkt wird. Die Zuleitung des Abwassers erfolgt dabei in einer Ausführungsform direkt aus dem anaeroben Reaktor, wobei in einer Ausführungsform die Zufuhr durch ein Ansaugen hiervon in den Reaktor erfolgt.

In der vorliegenden Erfindung wird das gasförmige Methan aus anaeroben methanhaltigen Abwässern gewonnen. Im Sinne der vorliegenden Erfindung werden unter anaeroben Abwässern Abwässer verstanden, die im Wesentlichen keinen Sauerstoff oder lediglich in unvermeidbaren Mengen Sauerstoff enthalten.

Das Verfahren zur Gewinnung von Methan aus anaerobem methanhaltigem Abwasser gemäß vorliegender Erfindung kann überall dort eingesetzt werden, wo in einem anaeroben Prozess Methan entsteht und dieses in einem wässrigen Medium gelöst vorliegt. Die Abwässer können, feststofffrei, feststoffarm oder feststoffreich sein. In einer Ausführungsform wird das Verfahren gemäß vorliegender Erfindung bei der kommunalen anaeroben Abwasserbehandlung eingesetzt, insbesondere zur Gewinnung des Methans aus den Abflüssen eines von "upflow anaerobic sludge blanket" UASB Reaktoren oder aus anaeroben Teichen.

Erfindungsgemäß werden dabei in einer Ausführungsform die Abwässer direkt aus dem Anaerobreaktor aber auch aus der Kanalisation oder einer anderen Quelle angesaugt. Das Ansaugen erfolgt dabei über die im Reaktor vorliegende Vakuumpumpe; dadurch kann sich eine zusätzliche Pumpe zur Förderung des Abwassers, z. B. eine Kreielpumpe, erübrigen.

Das Verfahren gemäß vorliegender Erfindung eignet sich auch besonders gut für die Behandlung von industriellen Abwässern, z.B. den Abwässern der Papierindustrie, Lebensmittel-Industrie, Brauereien, chemischen und pharmazeutischen Industrie, Molkereien, zur Behandlung von Schlämmen bzw. Schlammwässern aus kommunalen Faulbehältern, Gärresten aus Biogasanlagen, zu Behandlung von kommunalen Rohabwässern mit Methan-/Hydrogensulfid (H₂S)-Bildung im Kanalnetz.

Die anaeroben methanhaltigen Abwässer können bis zu 15 Gew. % Feststoffe enthalten. Üblicherweise enthalten die anaeroben methanhaltigen Abwässer von 0,01 bis 5 Gew. % Feststoffe. Die anaeroben methanhaltigen Abwässer können in einer Ausführungsform auch weitestgehend keine Feststoffe, bzw. lediglich unvermeidbare Mengen an Feststoffen enthalten.

Das Verfahren gemäß vorliegender Erfindung kann kontinuierlich oder diskontinuierlich (als batch-Prozess) durchgeführt werden. Bevorzugt wird das Verfahren jedoch kontinuierlich durchgeführt.

Bei dem Verfahren zur anaeroben Gewinnung von Methan aus anaerobem methanhaltigem Abwasser gemäß vorliegender Erfindung wird das Abwasser über eine Zuleitung (1) in einen zur umgebenden Atmosphäre abgeschlossenen Reaktor (10) eingeführt. In einer Ausführungsform wird das Abwasser dabei aus dem anaeroben Reaktor in den Reaktor (10) gesaugt. Der Reaktor kann beliebig angeordnet sein. Bevorzugt wird der Reaktor senkrecht angeordnet. Bei dem Reaktor (10) gemäß vorliegender Erfindung handelt es sich um einen geschlossenen Reaktor, bei dem der Zutritt von Sauerstoff-haltigen Gasen, bzw. Luft auf ein Minimum reduziert ist, bzw. gänzlich ausbleibt.

Der Reaktor (10) wird im Sinne der vorliegenden Erfindung auch als Entgasungsreaktor bezeichnet.

Der Reaktor (10) enthält mindestens eine Innenvorrichtung (3), die z.B. als mindestens ein Hohlkörper, wie ein Rohr oder ein Konus, als mindestens eine Platte oder als ein Bereich mit Füllkörpern, ausgebildet sein kann. Die Innenvorrichtung (3) des Reaktors kann auch als Kombination aus mindestens einer Platte, mindestens einem Rohr oder mindestens einem Konus ausgebildet sein. Die Innenvorrichtung (3) kann auch mehrere nebeneinander angeordneten Platten oder Rohre beinhalten. Der Reaktor (10) kann zusätzlich mit einem oder mehreren Rührer/n ausgestattet sein.

Die als Kombination aus Platten und Rohren ausgebildete Innenvorrichtung (3) hat den Vorteil, dass dadurch eine noch größere Ausgasungsfläche im Reaktor geschaffen wird und dadurch eine noch effizientere Gewinnung von Methan aus den anaeroben methanhaltigen Abwässern erreicht wird.

Der Reaktor (10) mit mindestens einer Innenvorrichtung (3) in Form eines Rohres oder einer Platte kann gemäß Verfahren der vorliegenden Erfindung sowohl für die feststoffreichen als auch für die feststoffarmen oder feststofffreien anaeroben Abwässer eingesetzt werden. Bevorzugt wird der Reaktor mit einer Innenvorrichtung in Form eines Hohlkörpers, wie eines Rohres oder Platte für die Behandlung von feststoffreichen anaeroben methanhaltigen Abwässern, eingesetzt.

Der Reaktor (10) im Verfahren gemäß vorliegender Erfindung kann einen Reaktorabschnitt (8) enthalten, in dem die Feststoffe während der Abwasserbehandlung sedimentieren können und von da aus über die Ablaufleitung (7) aus dem Reaktor abgezogen werden. In einer bevorzugten Ausführungsform der Erfindung können die Feststoffe mittels einer Pumpe aus dem Reaktor abgezogen werden. Der Reaktorabschnitt (8) stellt bevorzugt einen sich nach unten verjüngenden Abschnitt, besonders bevorzugt einen Trichter dar.

In einer bevorzugten Ausführungsform der Erfindung kann die Innenvorrichtung des Reaktors mit Füllkörpern in Form einer Füllkörpersäule( auch als Füllkörperreaktor bezeichnet) ausgebildet sein. Die Füllkörpersäule kann zylinderförmig mit einem runden oder ovalen Querschnitt sein, oder eine eckige Form aufweisen. Die Füllkörper können aus unterschiedlichen Werkstoffen bzw. Materialien beschaffen sein, z.B. Keramik, Metall oder Kunststoff. Besonders bevorzugt werden Füllkörper aus amorphem thermoplastischen Polyvinylchlorid Kunststoff (PVC). Die Füllkörper bilden dabei eine große Ausgasungsfläche im Reaktor aus.

Die Füllkörper können unterschiedlich geformt sein, z.B. zylinderförmig, als hochporöse Kugeln, als unregelmäßig geformten Körper mit großen Öffnungen. Das Verfahren gemäß vorliegender Erfindung unter Einsatz eines Reaktors, der eine Innenvorrichtung mit Füllkörpern aufweist, kann für die Methan-Gewinnung sowohl aus den feststoffreichen als auch aus den feststoffarmen Abwässern eingesetzt werden. Besonders bevorzugt wird der Füllkörperreaktor zur Entfernung von Methan aus feststoffarmen bzw. feststofffreien anaeroben Abwässern, z.B. aus Industrieabwässern eingesetzt. Bei diesem Verfahren kann der Reaktor (10) auch ohne den Reaktorabschnitt (8) betrieben werden.

Der Reaktor (10) im Verfahren gemäß vorliegender Erfindung kann eine Zuleitung (5) für Trägergas und/oder eine Zuleitung (6) für Strippgas enthalten. Das Trägergas wird typischerweise in den Bereich des Reaktors eingeführt, der kein Abwasser enthält. Das Strippgas wird in den Reaktor derart zugeführt, dass dieses das Methan-reduzierte, bzw. das im Wesentlichen Methan-freie Abwasser passiert.

Der Unterdruck im Reaktor (10) im Verfahren gemäß vorliegender Erfindung wird z. B. mittels Vakuumpumpe (4) erzeugt. Diese erlaubt ein Ansaugen des Abwassers aus dem Anaerobreaktor, eine zusätzliche Pumpe zur Förderung des Abwassers ist nicht notwendig.

Im Verfahren gemäß vorliegender Erfindung wird im Reaktor (10) eine vergrößerte Ausgasungsfläche mittels Innenvorrichtung (3) gebildet, so dass das Methan sich im abwasserfreien Raum des Reaktors anreichert und mittels Vakuumpumpe (4) abgezogen wird, während das im Wesentlichen Methan-freie, bzw. Methan-reduzierte Abwasser sich im unteren Reaktorabschnitt getrennt von dem eingeleiteten methanhaltigen anaeroben Abwasser sammelt und über die Ablaufleitung (7) abgezogen wird. Sollten die methanhaltigen anaeroben Abwässer Feststoffe enthalten, so werden diese über die Abzugsleitung (9) aus dem Reaktor entfernt.

Die Vergrößerung der Ausgasungsfläche kann auch durch die Erzeugung einer turbulenten Strömung im Reaktor (10) erreicht werden. Dadurch wird die Löslichkeit des Methans im Abwasser abgesenkt und die Gewinnung des Methans aus dem Abwasser verbessert. Eine weitere Verbesserung der Ausgasung wird zusätzlich durch das Aufbringen eines Vakuums im Reaktor mit Hilfe einer Vakuumpumpe (4) erreicht. Das Vakuum, insbesondere in Kombination mit der turbulentetn Strömung im Reaktor, bewirkt eine weitere Absenkung der Löslichkeit des Methans im Abwasser, wodurch die Methan-Gewinnung aus dem Abwasser noch weiter verbessert werden kann.

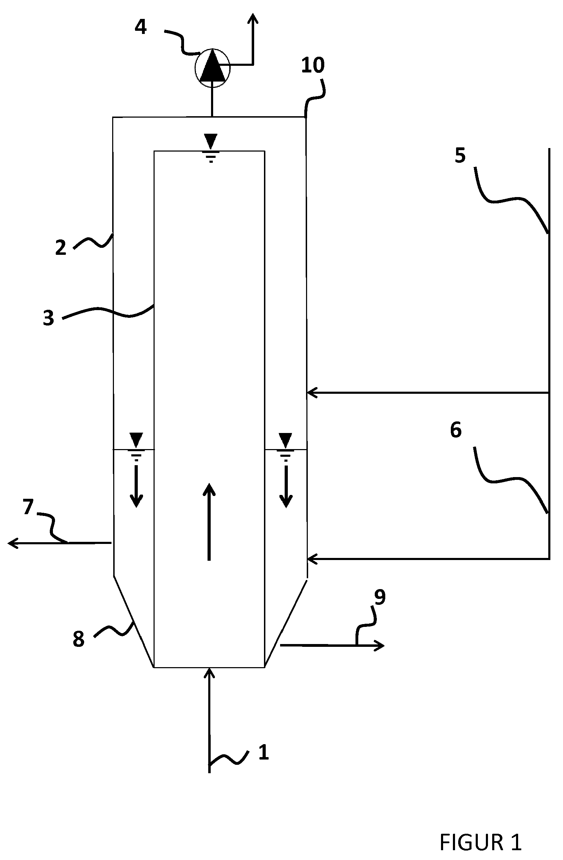

In der Figur 1 ist schematisch eine Ausführungsform des Verfahrens zur sauerstofffreien Gewinnung von Methan aus, gegebenenfalls Feststoffe entaltenden, anaerobem methanhaltigen Abwasser gemäß vorliegender Erfindung dargestellt. Es zeigt einen zur umgebenden Atmosphäre abgeschlossenen Reaktor (10), bei dem die Innenvorrichtung als Hohlkörper in Form eines Rohres ausgebildet ist. Ein derart ausgebildeter Reaktor stellt einen Fallfilmreaktor dar. Das anaerobe methanhaltige Abwasser steigt im Inneren des als Rohres ausgebildeten senkrecht angeordneten Innenvorrichtung (3) bis zur Überfallkante, d.h. bis zur oberen Kante der Innenvorrichtung (3) an und fließt dann an der äußeren Wand der Innenvorrichtung unter Bildung eines Wasserfilms herunter. Es kommt zu einer Entfernung des Methans aus dem Abwasser aufgrund einer vergrößerten Ausgasungsfläche an der äußeren Wand des Rohres (3), wobei das Methan sich im abwasserfreien Raum des Reaktors, das im Wesentlichen Methan-freie Abwasser sich im unteren Teil des Reaktors zwischen dem Rohr (3) und der Innenseite der äußeren Reaktorwand sammelt und anschließend durch die Ablaufleitung (7) abgezogen wird. Das Methan wird aus dem Reaktor mittels Vakuumpumpe (4) abgezogen. Im Fall, dass die anaeroben methanhaltigen Abwässer Feststoffe enthalten, sedimentieren diese im Reaktorabschnitt (8) und werden anschließend über die Abzugsleitung (9) abgezogen. Die Vakuumpumpe (4) fördert das Aufsteigen des Abwassers im Inneren des Rohres, so dass das Abwasser über die Überfallkante fließen kann. Die Vakuumpumpe (4) hat somit zwei Aufgaben. Erstens das Ansaugen des Abwassers und zweitens das Absaugen des Methans.

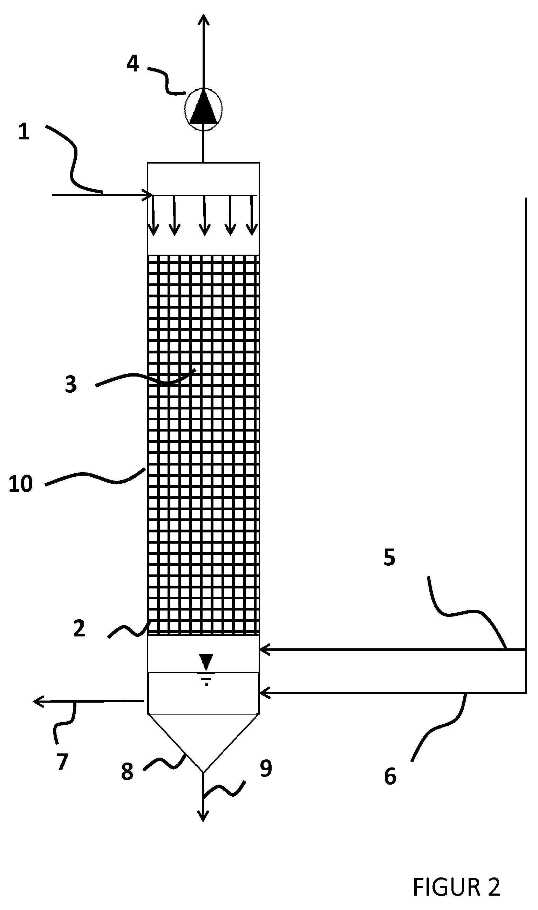

Figur 2 zeigt schematisch eine weitere Ausführungsform des Verfahrens gemäß vorliegender Erfindung, welches einen zur umgebenden Atmosphäre abgeschlossenen Reaktor (10) mit einer Innenvorrichtung enthält, wobei die Innenvorrichtung eine Füllkörpersäule (3) darstellt.

Bei dieser Ausführungsform der Erfindung wird das anaerobe methanhaltige Abwasser im oberen Teil des Reaktors eingeleitet. Das Abwasser passiert die Füllkörpersäule. Die Füllkörper bilden eine vergrößerte Ausgasungsfläche im Reaktor, durch die das methanhaltige Abwasser nach unten fließt. Dabei wird das entstehende Methan mittels Vakuumpumpe (4) aus dem Reaktor abgezogen und das im Wesentlichen Methan-freie anaerobe Abwasser welches sich im unteren Teil des Reaktors sammelt über die Ablaufleitung (7) aus dem Reaktor abgeführt. Wenn die anaeroben methanhaltigen Abwässer Feststoffe enthalten, so sedimentieren diese im Reaktorabschnitt (8) und werden anschließend über die Abzugsleitung (9) aus dem Reaktor entfernt.

Das Verfahren gemäß vorliegender Erfindung erlaubt somit die Behandlung der anaeroben methanhaltigen Abwässer, bei denen das Methan nahezu vollständig entfernt werden kann. Mit diesen Verfahren können bis zu 80 Vol.%, bevorzugt bis zu 90 Vol. %, besonders bevorzugt bis zu 99 Vol. % des Methans aus den anaeroben methanhaltigen Abwässern gewonnen werden.

In einer bevorzugten Ausführungsform des Verfahrens gemäß vorliegender Erfindung, erfolgt der Abzug des, während des Ausgasungsprozesses entstehenden Methans, und die Zuleitung des anaeroben methanhaltigen Abwassers in den Reaktor (10) mittels einer bzw. mittels derselben Vakuumpumpe (4). Dabei bewirkt das Vakuum, welches durch die Vakuumpumpe (4) erzeugt wird, gleichzeitig ein automatisches Ansaugen des anaeroben methanhaltigen Abwassers aus der davor liegenden anaeroben Stufe in den Reaktor. Die besondere hydraulische Gestaltung des Reaktors bewirkt gleichzeitig, dass das, im Wesentlichen Methan-freie Abwasser automatisch in die nächste Abwasserbehandlungsstufe fließen kann. Somit ist für den Betrieb des Reaktors nur eine Vakuumpumpe nötig, was einen besonders niedrigen Energiebedarf des Verfahrens bewirkt.

Die Vakuumpumpe erzeugt einen Unterdruck im Reaktor (10), der für den Prozess zur Gewinnung von Methan notwendig ist. Der Unterdruck im Reaktor kann 0,01 bis 0,99 bar, bevorzugt 0,1 bis 0,9 bar, besonders bevorzugt 0,2 bis 0,5 bar betragen.

In einer weiteren bevorzugten Ausführungsform des Verfahrens gemäß vorliegender Erfindung kann ein Trägergas ausgewählt aus der Gruppe der Gase Stickstoff, Kohlendoxid (CO₂), sauerstoffarme methanhaltige Luft, Schwefeldioxid, Kohlenmonoxid, Wasserstoff, Rauchgas oder deren Mischungen in den im Wesentlichen abwasserfreien Raum des Reaktors während des Prozesses eingeleitet werden. Wenn eine methanhaltige Gasmischung als Trägergas eingesetzt wird, so kann die Methan-Konzentration in der Gasmischung ≤ 30 Vol. %, bevorzugt ≤ 10 Vol. %, besonders bevorzugt ≤ 5 Vol. % betragen. Die Sauerstoff-armen Trägergasmischungen können < 21 Vol. %, bevorzugt ≤ 6 Vol. %, besonders bevorzugt ≤ 1 Vol. % Sauerstoff enthalten. Weiter bevorzugt werden als Trägergas Gase oder Gasmischungen eingesetzt, die lediglich unvermeidbare Mengen an Sauerstoff enthalten.

Wenn die im Abwasser vorhandene Feststoffe im unteren Reaktorbereich zurückgehalten werden und der Methan-Gehalt im abwasserfreien Raum des Reaktors auf einen Wert von ≥ 1 Vol. % ansteigt, oder die Konzentration des gelösten Methans im Ablauf zu hoch ist, kann es notwendig sein den Anteil des Methans in der Gasphase durch die Zufuhr eines Trägergases, bevorzugt oberhalb des Abwasserspiegels weiter zu reduzieren, um die Löslichkeit des Methans im Abwasser herabzusetzen und somit die Geschwindigkeit der Entgasung und den gesamten Wirkungsgrad der Entgasung des anaeroben Abwassers zu erhöhen.

In einer weiteren bevorzugten Ausführungsform des Verfahrens gemäß vorliegender Erfindung kann ein Strippgas ausgewählt aus der Gruppe der Gase Stickstoff, Kohlendoxid (CO₂), sauerstoffarme methanhaltige Luft, Schwefeldioxid, Kohlenmonoxid, Wasserstoff oder deren Mischungen in das, im Wesentlichen Methan-freie Abwasser eingeleitet werden.

Wenn eine methanhaltige Gasmischung als Strippgas eingesetzt wird, so kann die Methan-Konzentration in der Gasmischung ≤ 30 Vol. %, bevorzugt ≤ 10 Vol. %, besonders bevorzugt ≤ 5 Vol. % betragen. Die Sauerstoff-armen Strippgasmischungen können < 21 Vol. %, bevorzugt ≤ 6 Vol. %, besonders bevorzugt ≤ 1 Vol. % Sauerstoff enthalten. Weiter bevorzugt, werden als Strippgas Gase oder Gasmischungen eingesetzt, die lediglich unvermeidbare Mengen an Sauerstoff enthalten.

Das Trägergas und das Strippgas kann das gleiche Gas oder die gleiche Gasmischung sein. Das Trägergas und das Strippgas können auch unterschiedliche Gase oder Gasmischungen sein.

Werden in den Reaktor Träger-bzw. Strippgas eingeleitet, so stellt das gewonnene Methan ein Gasgemisch dar. Dieses Gasgemisch kann gegebenenfalls nach einer weiteren Aufbereitung energetisch verwertet werden. Das bei der energetischen Verwertung entstehende Rauchgas ist methanarm und kann als Träger-bzw. Strippgas bei der Entgasung von anaeroben methanhaltigen Abwässern eingesetzt werden.

Die Innenvorrichtung (3) des Reaktors (10) im Verfahren gemäß vorliegender Erfindung kann unterschiedlich ausgebildet sein, z. B. als ein Rohr, als eine Platte oder Kombination aus Rohr und Platte. Die Höhe der Innenvorrichtung (3) kann beliebig sein. Es ist jedoch vorteilhaft, wenn die Innenvorrichtung des Reaktors kürzer als der Außenbehälter (2) ist.

In einer weiteren bevorzugten Ausführungsform des Verfahrens gemäß vorliegender Erfindung kann das Verfahren auch in mehreren Reaktoren der gleichen oder unterschiedlichen Ausführungsart, die hintereinander angeordnet und miteinander verbunden sind, und so ein Reaktorsystem bilden, durchgeführt werden. So kann ein Reaktor, z.B. ein oder mehrere Rohre als Innenvorrichtung haben, wobei der zweite Reaktor eine Füllkörpersäule als Innenvorrichtung aufweist. Bei diesem Reaktorsystem handelt es sich um ein mehrstufiges Verfahren, bei dem die Entfernung des Methans aus anaeroben methanhaltigen Abwässern noch weiter verbessert wird.

Gegenstand der vorliegenden Erfindung ist auch eine Vorrichtung zur anaeroben Gewinnung von Methan aus, gegebenenfalls Feststoffe enthaltendem, anaerobem methanhaltigen Abwasser umfassend:
a) einen geschlossenen Reaktor (10) bestehend aus einem Außenbehälter (2), mit mindestens einer Innenvorrichtung (3), einem abnehmbaren Reaktorabschnitt (8), und gegebenenfalls einer Zuleitung (5) für Trägergas und einer Zuleitung (6) für Strippgas;
b) eine Vakuumpumpe (4);
c) eine Zuleitung (1) für das Abwasser;
d) eine Ablaufleitung (7) für das im Wesentlichen Methan-freie anaerobe Abwasser.

Bei dem Reaktor (10) in der Vorrichtung gemäß vorliedender Erfindung handelt es sich um einen zur umgebenden Atmosphäre abgeschlossenen Reaktor.

In einer bevorzugten Ausführungsform der Erfindung weist die Vorrichtung einen Reaktor (10) mit mindestens einer Innenvorrichtung (3) auf, die als mindestens ein Hohlkörper, wie ein Rohr oder Konus, mindestens eine Platte, mindestens eine Vorrichtung mit Füllkörpern, z.B. eine Füllkörpersäule ist. Die Innenvorrichtung (3) der Vorrichtung gemäß vorliegender Erfindung kann auch eine Kombination aus mindestens einem Rohr, mindestens einer Platte und/oder mindestens einem Rührer darstellen.

Die Innenvorrichtung (3) des Reaktors (10) in der Vorrichtung gemäß vorliegender Erfindung kann unterschiedlich ausgebildet sein, z. B. als ein Rohr, als ein Konus, als eine Platte oder als eine Kombination aus Rohr und Platte bzw. Konus und Platte. Die Höhe der Innenvorrichtung (3) kann beliebig sein. Es ist jedoch vorteilhaft wenn der Innenbereich kürzer als der Außenbehälter (2) ist.

Ein weiterer Gegenstand der vorliegenden Erfindung ist eine Anlage zur anaeroben Abwasserbehandlung mit einer ersten anaeroben Abwassserbehandlungsstufe dem sich eine erfindungsgemäße Vorrichtung zur Durchführung des erfindungsgemäßen Verfahrens anschließt. Aus dieser ersten Abwasserbehandlungsstufe wird das methanhaltige Abwasser in die erfindungsgemäße Vorrichtung zur Durchführung des erfindungsgemäßen Verfahrens eingeleitet. Das aus der erfindungsgemäßen Vorrichtung abgeleitete Methan-abgereicherte Abwasser wird dann in eine nächste Abwasserbehandlungsstufe geführt und dort weiter verarbeitet.

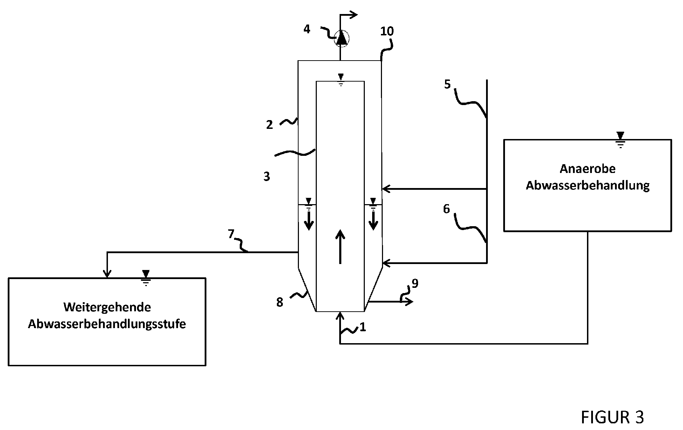

In Figur 3 wird beispielhaft eine erfindungsgemäße Anlage zur Durchführung des Verfahrens gemäß vorliegender Erfindung dargestellt, wobei die Entfernung des Methans mittels Vakuumentgasung nach der ersten anaeroben Abwasserbehandlungsstufe erfolgt. Der zu behandelnde Abwasserstrom wird durch den im Reaktor (10) herrschenden Unterdruck automatisch angesaugt, z.B. aus einem Vorratsbehälter. Über die Zuleitung (1) kann die Vakuumpumpe das bei der anaeroben Abwasserbehandlung anfallende Abwasser direkt in den Reaktor (10) ansaugen. Einer zusätzlichen Pumpe bedarf es nicht. Die besondere hydraulische Gestaltung des Reaktors bewirkt gleichzeitig, dass das behandelte Abwasser automatisch in die nächste Abwasserbehandlungsstufe fließt. Somit ist für den Betrieb des Reaktors nur eine Vakuumpumpe erforderlich.

### Vorteile der Erfindung

Das Verfahren gemäß vorliegender Erfindung hat gegenüber den, aus dem Stand der Technik bekannten Verfahren, in denen der Reaktor als ein Füllkörper mit Strippgas oder als Verdüser betrieben werden, den Vorteil, dass im Verfahren gemäß vorliegender Erfindung, keine Luft, die ca. 21% Sauerstoff enthält, in das System eingeführt wird. Somit kann kein explosionsfähiges Gasgemisch entstehen welches, vor der energetischen Verwertung, problemlos zwischengespeichert werden kann.

Verglichen mit dem Stand der Technik ist das Verfahren gemäß vorliegender Erfindung sehr robust. Das Verfahren zeichnet sich insbesondere durch eine einfache Konstruktion aus und enthält so gut wie keine beweglichen Teile. Bei dem Verfahren gemäß vorliegender Erfindung besteht keine Verstopfungsgefahr im Reaktor.

Darüber hinaus erfordert das erfindungsgemäße Verfahren einen geringeren Energiebedarf. Bei Wasala et al. wird z.B. eine Tauchmembran verwendet. Die Membran wird mit einem Membranvakuum von ca. 0,5 bar betrieben. Zusätzlich muss der Wasserfluss im System durch eine Wasserpumpe geregelt werden. Bei dem Verfahren gemäß vorliegender Erfindung können höhere Drücke von ca. 0,8 bar verwendet werden. Der Durchfluss des Wassers läuft automatisch durch das angelegte Vakuum im System und durch die hydraulische Auslegung. Es ist somit keine zusätzliche Pumpe für die Regelung des Wasserflusses nötig.

Die Problematik eines langfristigen Biofoulings (Biofilmwachstum auf Membran und in Poren) das den Gasfluss durch die Membran reduziert ist durch das erfindungsgemäße Verfahren nicht gegeben.

Das Verfahren gemäß vorliegender Erfindung ist wesentlich kostengünstiger als das Membranverfahren, da beim Membranverfahren eine ausreichende Membranoberfläche für die hohen Abwassermengen im großtechnischen Maßstab zur Verfügung gestellt werden muss.

Bei dem Verfahren gemäß vorliegender Erfindung wird ein methanarmes und sauerstofffreies Gas oder eine methanarme und sauerstofffreie Gasmischung (Strippgas/Trägergas), die über den Reaktorboden und/oder oberhalb des Wasserspiegels in den Reaktor eingeführtwerden/wird , um einerseits den Methanpartialdruck im Reaktor zu senken, und andererseits ein schnelleres Ausgasen des Abwassers und das Strippen des Restgases im Abwasser zu bewirken. Damit kann ein geringer Unterdruck angelegt werden, was eine Energieeinsparung der Pumpenenergie und Reduzierung der Bauhöhe des Reaktors ermöglicht.

## Patentansprüche

1. Verfahren zur anaeroben Gewinnung von Methan aus, gegebenenfalls Feststoffe enthaltenden, anaerobem methanhaltigen Abwasser umfassend folgende Schritte:
a) Einführung des anaeroben methanhaltigen Abwassers über eine Zuleitung (1) in einen geschlossenen Reaktor (10), wobei der Reaktor einen Außenbehälter (2), mit mindestens eine Innenvorrichtung (3), einen gegebenenfalls abnehmbaren Reaktorabschnitt (8) und, gegebenenfalls eine Zuleitung (5) für Trägergas und/oder eine Zuleitung (6) für Strippgas umfasst;
b) Erzeugung eines Unterdrucks im Reaktor (10) mittels Vakuumpumpe (4);
c) Bildung einer vergrößerten Ausgasungsfläche des anaeroben methanhaltigen Abwassers im Reaktor (10) mittels Innenvorrichtung (3), wobei das erhaltene im Wesentlichen Methan-freie Abwasser sich in einem Abschnitt des Reaktors sammelt, getrennt von dem eingeführten anaeroben methanhaltigen Abwasser und, gegebenenfalls der Feststoff in einem Reaktorabschnitt (8) sedimentiert;
d) Abzug des Methans mittels Vakuumpumpe (4) und des erhaltenen, im Wesentlichen Methan-freien Abwassers über die Ablaufleitung (7);
e) gegebenenfalls Abzug des sedimentierten Feststoffes aus dem Reaktorabschnitt (8) über die Abzugsleitung (9).

2. Verfahren nach Anspruch 1, wobei die Innenvorrichtung (3) ausgebildet ist als mindestens ein Hohlkörper, als mindestens eine Platte, als mindestens ein Bereich mit Füllkörpern oder als mindestens ein Konus.

3. Verfahren nach Anspruch 2, wobei der Hohlkörper ein Rohr ist.

4. Verfahren nach einem der vorherigen Ansprüche, wobei der Abzug des Methans und die zumindest teilweise Zuleitung des Abwassers in den Reaktor (10) mittels Vakuumpumpe (4) erfolgen.

5. Verfahren nach mindestens einem der vorherigen Ansprüche, wobei der Unterdruck im Reaktor (10) 0,01 bis 0,99 bar beträgt.

6. Verfahren nach Anspruch 5, wobei der Unterdruck im Reaktor (10) 0,1 bis 0,9 bar beträgt.

7. Verfahren nach Anspruch 5, wobei der Unterdruck im Reaktor (10) 0,2 bis 0,5 bar beträgt.

8. Verfahren nach mindestens einem der vorherigen Ansprüche, wobei ein Trägergas ausgewählt aus der Gruppe der Gase Stickstoff, Kohlendioxid sauerstoffarme methanhaltige Luft, Schwefeldioxid, Kohlenmonoxid, Wasserstoff, Rauchgas oder deren Mischungen in den abwasserfreien Raum des Reaktors (10) eingeleitet wird.

9. Verfahren nach mindestens einem der vorherigen Ansprüche, wobei ein Strippgas ausgewählt aus der Gruppe der Gase Stickstoff, Kohlendoxid sauerstoffarme methanhaltige Luft, Schwefeldioxid, Kohlenmonoxid, Wasserstoff, Rauchgas oder deren Mischungen in das im Wesentlichen Methan-freie Abwasser eingeleitet wird.

10. Verfahren nach mindestens einem der vorherigen Ansprüche, wobei mindestens zwei Reaktoren (10) nebeneinander angeordnet und miteinander verbunden sind.

11. Vorrichtung zur anaeroben Gewinnung von Methan aus, gegebenenfalls Feststoffe enthaltendem, anaerobem methanhaltigen Abwasser umfassend:
a) einen geschlossenen Reaktor (10) bestehend aus einem Außenbehälter (2), mit mindestens einer Innenvorrichtung (3), einem gegebenenfalls abnehmbaren Reaktorabschnitt (8), und gegebenenfalls einer Zuleitung (5) für Trägergas und einer Zuleitung (6) für Strippgas;
b) eine Vakuumpumpe (4);
c) eine Zuleitung (1) für das Abwasser;
d) eine Ablaufleitung (7) für das im Wesentlichen Methan-freie anaerobe Abwasser.

12. Vorrichtung nach Anspruch 11, wobei die mindestens eine Innenvorrichtung (3) mindestens ein Hohlkörper, mindestens eine Platte, mindestens ein Bereich mit Füllkörpern oder mindestens ein Konus ist.

13. Vorrichtung nach Anspruch 12, wobei der Hohlkörper ein Rohr ist.

14. Anlage zur anaeroben Abwasserreinigung mit einer Gewinnung von Methan, mit einer ersten anaeroben Abwasserbehandlungstufe, einer Vorrichtung gemäß Anspruch 11 bis 13 zur Durchführung des Verfahrens nach einem der Ansprüche 1 bis 10 und einer sich anschließenden weiteren anaeroben Abwasserbehandlungsstufe.

15. Anlage nach Anspruch 14, wobei keine zusätzliche Förderungseinreichtung zwischen der anaeroben Abwasserbehandlungsstufe und der Vorrichtung nach einem der Ansprüche 11 bis 13 vorliegt.
